# EUROPEAN PATENT APPLICATION

(11) **EP 2 853 162 A1**
(43) Date of publication of application: **01.04.2015**
(21) Application number: 14185079.2
(22) Date of filing: 17.09.2014
(51) Int. Cl.: A21B 7/00

(54) **Driving mechanism and a bread making machine having the same**

(30) Priority: 18.09.2013 CN 201310429042
(71) Applicant: Tsann Kuen (Zhangzhou) Enterprise Co., Ltd., Fujian 363107 (CN)
(72) Inventor: Zhang, Zhong-Hua, 36107 Zhang Zhou (CN)
(74) Representative: Zimmermann, Tankred Klaus

(57) **Abstract**

A driving mechanism (3) is to be mounted in an electrical appliance. The electrical appliance includes a housing unit (1), and a container unit (2) movable in a moving axis (20) relative to the housing unit (1) between retained and pulled-out positions, The driving mechanism (3) includes a driven shaft (34) to be mounted to the container unit (2), and a driving shaft (32) to be mounted to the housing unit (1), and to be driven to rotate about an axis (39) which extends in a direction transverse to the moving axis (20) to an engageable state, where the container unit (2) is permitted to be moved to the retained position, and where the driving shaft (32) is further rotatable to rotate of the driven shaft (34) via abutment between a pushing wall (324) of the driving shaft (32) and an abutment wall (344) of the driving shaft (34).

## Description

The invention relates to a driving mechanism, more particularly to a driving mechanism for a bread making machine.

A conventional driving mechanism generally includes a driving shaft that can be driven by a power source to rotate for driving rotation of a driven shaft. The driving shaft and the driven shaft may be connected respectively to different objects that are separably connected to each other, that is, the driving shaft and the driven shaft are not connected together when the driving and driven shafts are separated from each other. A bread making machine equipped with the abovementioned conventional driving mechanism includes a housing that receives the power source, and a loaf pan that is disposed separably in the housing. The driving shaft of the conventional driving mechanism is mounted to the housing and is driven rotatably by the power source. The driven shaft of the conventional driving mechanism is mounted to the loaf pan and is connected to a rotary paddle. The driving shaft and the driven shaft are co-axially coupled to each other when the loaf pan is properly retained in the housing, so that the driven shaft can be driven to rotate by the driving shaft.

However, to retain the loaf pan in the housing, care should be taken to ensure precise coupling between the driven shaft and the driving shaft. In addition, the housing has an opening at a top end thereof for facilitating placement of the loaf pan into the housing and removal of the loaf pan from the housing. Therefore, a sufficient space over the bread making machine has to be preserved when the bread making machine is in use, thereby limiting location choices for setting up the bread making machine.

Therefore, an object of the present invention is to provide a driving mechanism that can eliminate the aforesaid drawback associated with the prior art.

Accordingly, a driving mechanism of the present invention is adapted to be mounted in an electrical appliance. The electrical appliance includes a housing unit that includes a power supply unit, and a container unit that is connected to the housing unit, that includes a rotary paddle, and that is movable in a moving axis relative to the housing unit between a retained position to be retained in the housing unit, and a pulled-out position to be out of the housing unit. The driving mechanism includes a driven shaft, a driving shaft and a control unit. The driven shaft is adapted to be mounted to the container unit and has at least one abutment wall. The rotary paddle is coupled co-rotatably to the driven shaft. The driving shaft is adapted to be mounted to the housing unit, has at least one pushing wall, and is adapted to be driven by the power supply unit to rotate about an axis, which extends in a direction transverse to the moving axis, to an engageable state, where the container unit is permitted to be moved from the pulled-out position to the retained position, and where the driving shaft is further rotatable about the axis to drive rotation of the driven shaft about the axis via abutment between the at least one pushing wall and the at least one abutment wall. The control unit is adapted for controlling operation of the power supply unit to move the driving shaft to the engageable state.

Another object of the present invention is to provide a bread making machine having such driving mechanism.

Accordingly, a bread making machine includes a housing unit, a container unit and a driving mechanism. The housing unit includes a housing that defines a receiving space therein, and a power supply unit that is disposed in the housing. The container unit includes a container and a rotary paddle that is disposed in the container. The container unit is movable in a moving direction relative to the housing unit between a retained position to be retained in the receiving space of the housing unit, and a pull-out position to be out of the housing unit. The driving mechanism includes a driven shaft that is mounted to the container unit and that has at least one abutment wall. The rotary paddle is coupled co-rotatably to the driven shaft. The driving shaft is mounted to the housing, has at least one pushing wall, and is able to be driven by the power supply unit to rotate about an axis, which extends in a direction transverse to the moving axis, to an engageable state, where the container unit is permitted to be moved from the pulled-out position to the retained position, and where the driving shaft is further rotatable about the axis to drive rotation of the driven shaft about the axis via abutment between the at least one pushing wall and the at least one abutment wall. The control unit is disposed for controlling operation of the power supply unit to move the driving shaft to the engageable state.

Other features and advantages of the present invention will become apparent in the following detailed description of the embodiment with reference to the accompanying drawings, of which:
Figure 1 is a side view of an embodiment of a bread making machine according to the invention;
Figure 2 is a fragmentary partly exploded perspective view of the embodiment;
Figure 3 is a fragmentary sectional view of the embodiment, illustrating a container unit at a pulled-out position;
Figure 4 is fragmentary exploded sectional view of a housing unit and a driving mechanism of the embodiment;
Figure 5 is an exploded perspective view of the driving mechanism of the embodiment;
Figure 6 is a sectional view of a control unit of the driving mechanism and the driving shaft of the embodiment;
Figure 7 is another fragmentary sectional view of the embodiment, illustrating the container unit being moved between the pull-out position and a retained position;
Figure 8 is still another fragmentary sectional view of the embodiment, illustrating the container unit at the retained position;
Figure 9 is a fragmentary schematic side view illustrating the variation of relative positions of the driven shaft and a guide element during movement of the container unit from the retained position to the pulled-out position; and
Figure 10 is a view similar to Figure 7, but illustrating how the driven shaft is guided by the guide element to rotate during the movement o the container unit from the retained position to the pulled-out position.

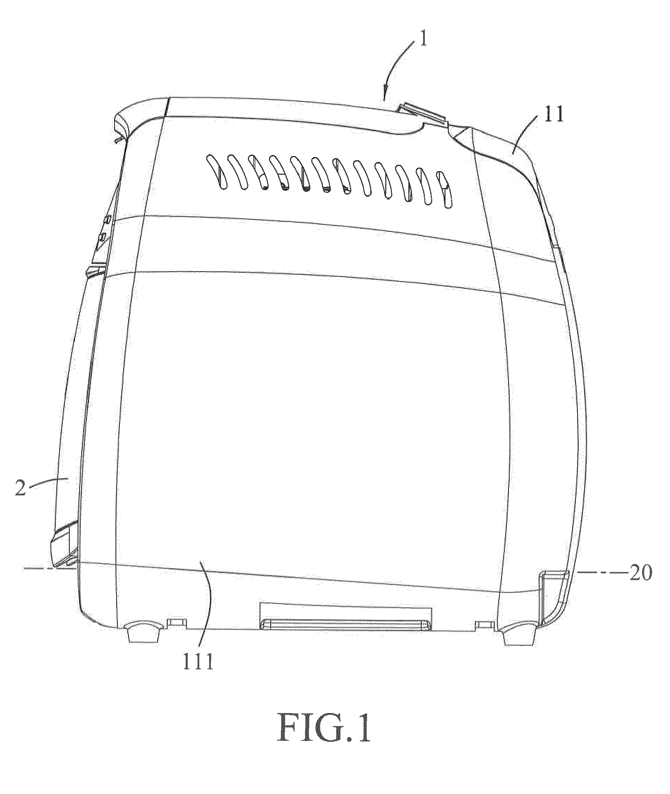

Referring to Figures 1 to 3, the embodiment of a bread making machine according to the present invention includes a housing unit 1, a container unit 2 and a driving mechanism 3.

The housing unit 1 includes a housing 11 including a side surrounding wall 111 and a bottom wall 122 that cooperates with the side surrounding wall 111 to define a receiving space 12 therebetween. The side surrounding wall 111 is formed with a side opening 121 at a front end thereof and communicating with the receiving space 12. The bottom wall 12 is horizontal and formed with a mounting hole 123. The housing unit 1 further includes a guide element 13 disposed in the housing 11 and mounted on the bottom wall 122 between the side opening 121 and the mounting hole 123, and a power supply unit 14 disposed in the housing 11. The power supply unit 14 is a mechanism including gears, a driving belt and a motor. Since the feature of this invention does not reside in the specific configuration of the power supply unit 14, which is known in the art, further details of the same are omitted herein for the sake of brevity.

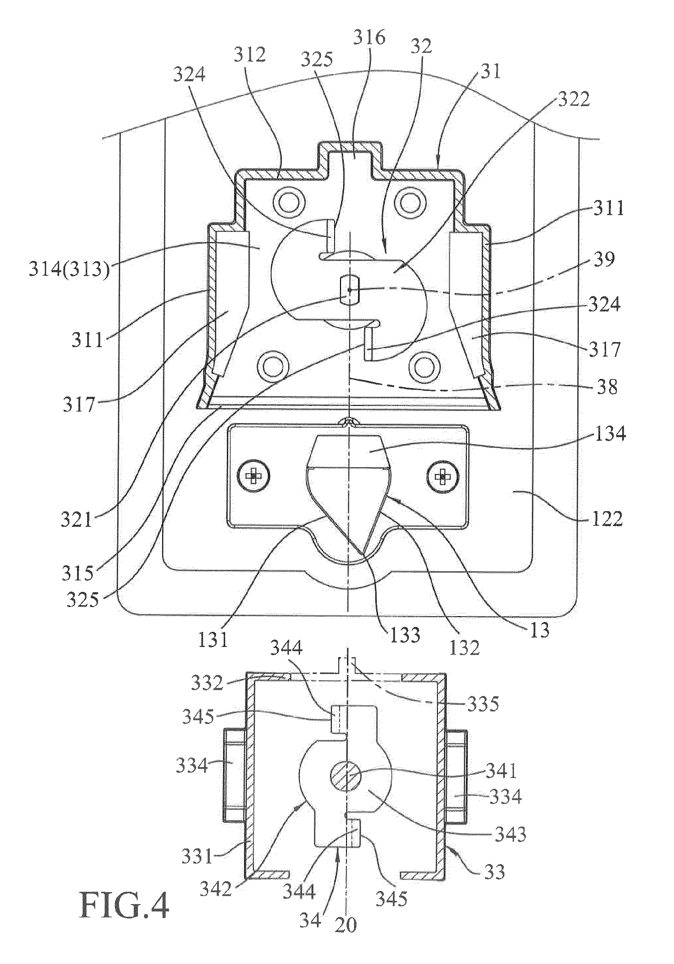

Further referring to Figure 4, in this embodiment, the guide element 13 has inclined and upright first and second guide surfaces 131, 132. The first and second guide surfaces 131, 132 are connected to each other at a tip 133 of the guide element 13 that is adjacent to the side opening 121.

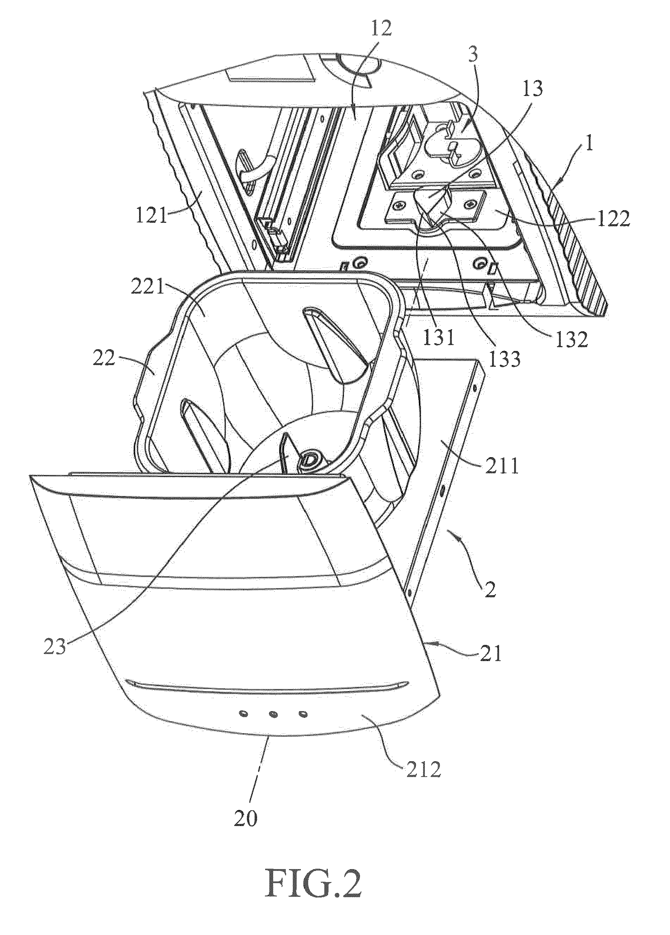

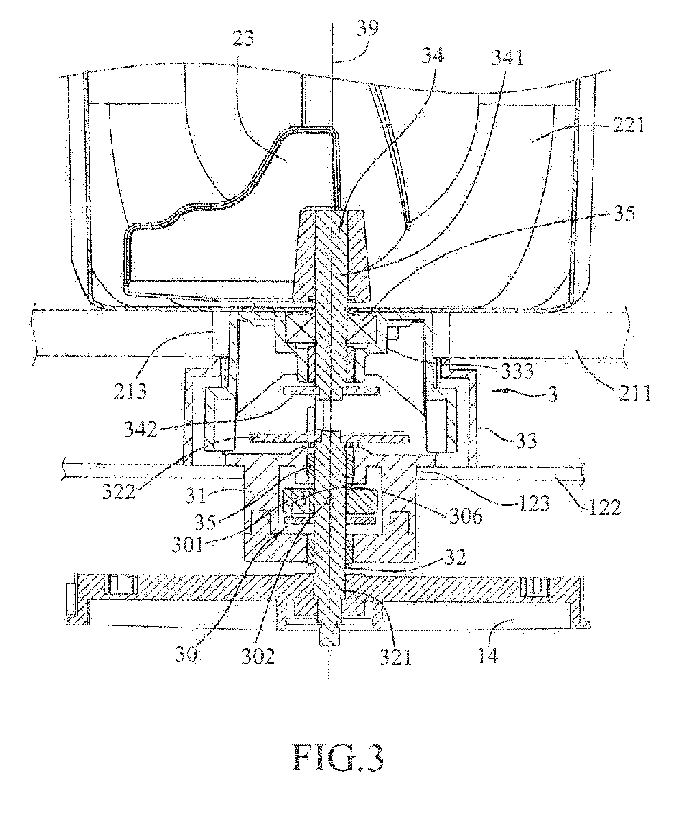

The container unit 2 includes a support seat 21, a container 22 and a rotary paddle 23. The support seat 21 includes a base board 211 that is parallel to the bottom wall 122 of the housing 11, that is formed with an extension hole 213, and that is connected to the housing 11, and an upright side board 212 that is connected to an end of the base board 211. Specifically, two slide rails (not shown) are provided between the base board 211 and the side surrounding wall 111 of the housing 11 so that the support seat 21 is slidable relative to the housing 11 along a moving axis 20 (see Figure 1). The container 22 is configured as a loaf pan, and is mounted swayably on the base board 211 of the support seat 21. The rotary paddle 23 is disposed in the container 22. The container unit 2 is slidable in the moving axis 20 relative to the housing 11 between a retained position (see Figures 1 and 3) to be retained in the receiving space 12 of the housing unit 1, and a pulled-out position (see Figure 2) to be out of the housing unit 1. The side board 212 of the support seat 21 covers the side opening 121 when the container unit 2 is at the retained position.

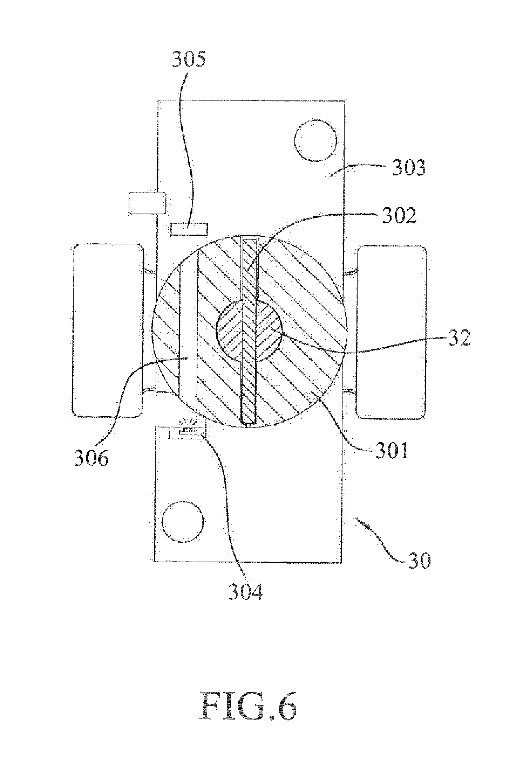

As shown in Figures 3 to 6, the driving mechanism 3 includes a first guide seat 31, a driving shaft 32, a control unit 30, a second guide seat 33 and a driven shaft 34.

The first guide seat 31 engages fixedly the mounting hole 123 of the bottom wall 122 of the housing 11, and includes two parallel first side plates 311 extending in the moving axis 20, a first end plate 312 interconnecting the first side plates 311, and a bottom plate 313 interconnecting the first side plates 311 and the first end plate 312 and cooperating with the first side plates 311 and the first end plate 312 to define a retaining space 314 thereamong. The retaining space 314 has an enlarged end 315 opposite to the first end plate 312 along the moving axis 20. Each of the first side plates 311 is formed with a side groove 317 in spatial communication with the retaining space 314. The first end plate 312 is formed with an end groove 316 in spatial communication with the retaining space 314.

The driving shaft 32 has a main shaft portion 321 extending through the bottomplate 313 of the first guide seat 31 along an axis 39 which extends in a direction transverse to the moving axis 20, and being able to be driven by the power supply unit 14 to rotate about the axis 39, and a driving shaft portion 322 disposed in the retaining space 314 of the first guide seat 31. The driving shaft portion 322 includes an S-shaped main driving wall 323 connected co-rotatably to the main shaft portion 321, and two spaced-apart pushing walls 324 extending upwardly from the main driving wall 323. The axis 39 extends along an imaginary plane 38 which is parallel to the moving axis 20. Each of the pushing walls 324 has a pushing surface 325. The imaginary plane 38 passes through the guide element 13 of the housing unit 1, and the tip 133 of the guide element 13 is disposed at one side of the imaginary plane 38, i.e., the first and second guide surfaces 131, 132 have different slopes. The first side plates 311 of the first guide seat 31 are disposed at opposite sides of the imaginary plane 38, and the first end plate 312 of the first guide seat 31 is perpendicular to the imaginary plane 38. The guide element 13 of the housing unit 1 further has an inclined surface 134 that is proximate to the driving shaft 32, that is registered with the imaginary plane 38, and that has a front end and a rear end lower to the front end.

The control unit 30 is connected to the first guide seat 31 and is disposed under the bottom wall 122 of the housing 1 for controlling operation of the power supply unit 14. In this embodiment, the control unit 30 includes a control seat 301 coupled to the main shaft portion 321 of the driving shaft 32 and formed with a through hole 306, a pin 302 extending through the control seat 301 and the main shaft portion 321 so as to connect co-rotatably the control seat 301 to the main shaft portion 321 of the driving shaft 32, a bottom plate 303 connected fixedly to the first guide seat 31, one spaced-apart stationary light emitting component 304 mounted on the bottom plate 303, and a stationary light receiving component 305 mounted on the bottom plate 303 and spaced apart from the light emitting component 304.

The second guide seat 33 includes two second side plates 331 disposed to be adjacent respectively to the first side plates 311 of the first guide seat 31. Each of the second side plates 331 is formed with a side protrusion 334 engaging removably the side groove 317 of the respective one of the first side plates 311 of the first guide seat 31 when the container unit 2 is at the retained position. The second guide seat 33 further includes a second end plate 332 perpendicular to the imaginary plane 38, interconnecting the second side plates 331, and formed with an end protrusion 335 that engages removably the end groove 316 of the first guide seat 31 when the container unit 2 is at the retained position. The second guide seat 33 further includes a top plate 333 that is connected to top ends of the second side plates 331 and the second end plate 332, and that is connected fixedly to the container 22. The second guide seat 33 is disposed under the container 22 with a top portion thereof engaging fixedly the extension hole 213 of the support seat 21 of the load pan unit 2.

The driven shaft 34 has a main shaft part 341 mounted rotatably to the top plate 333 of the second guide seat 33 and extending into the container 22 in a direction of the axis 39. The rotary paddle 23 is coupled co-rotatably to the main shaft part 341 of the driven shaft 34. The driven shaft 34 further has a driven shaft part 342 disposed in the second guide seat 33 and connected fixedly to the main shaft part 341. Specifically, the driven shaft part 342 has an S-shaped main driven wall 343 connected to the main shaft part 341, and two spaced-apart abutment walls 344 extending downwardly from the main driven wall 343. Each of the abutment walls 344 has an abutment surface 345.

As shown in Figure 3, the driving mechanism 3 further includes two bearings 35. One of the bearings 35 is provided between the main shaft portion 321 of the driving shaft 32 and the bottom plate 313 of the first guide seat 31, while the other one of the bearings 35 is provided between the main shaft part 341 of the driven shaft 34 and the top plate 333 of the second guide seat 33 so as to ensure smooth rotations of the driving shaft 32 and the driven shaft 34.

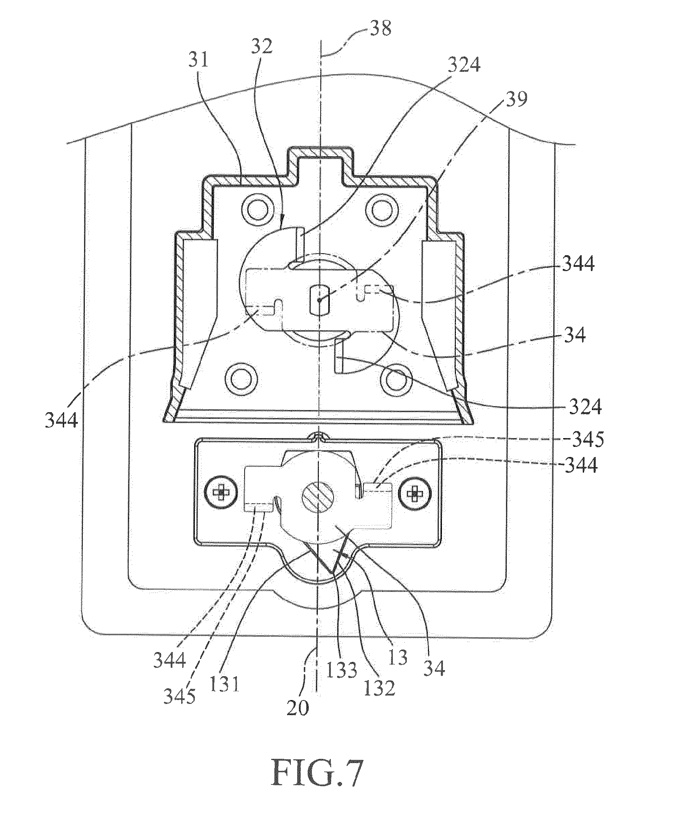

As shown in Figures 2, 4, 6 and 7, when the bread making machine of this invention is in use, the container unit 2 is first pushed in the moving axis 20 from the pulled-out position toward the retained position. Meanwhile, the driving shaft 32 is driven by the power supply unit 14 to rotate about the axis 39 to an engageable state (see Figure 4), where the pushing walls 324 of the driving shaft 32 are disposed at opposite sides of the imaginary plane 38 and where the pushing surface 325 of each of the pushing walls 324 is parallel to the imaginary plane 38. When the driven shaft part 342 of the driven shaft 34 contacts the guide element 13 during the abovementioned movement of the container unit 2, the abutment walls 344 of the driven shaft 34 abut slidably against at least one of the first and second guide surfaces 131, 132. Since the tip 133 of the guide element 13 is nonregistered with the imaginary plane 38, the abutment walls 344 would eventually be pushed under guidance of the at least one of the first and second guide surfaces 131, 132 to drive rotation of the driven shaft 34 to a non-interfering position (see Figure 7), where the abutment walls 344 are disposed at opposite sides of the imaginary plane 38 and where an angle between the abutment surface 345 of each of the abutment walls 344 and the imaginary plane 38 ranges between 45 degrees and 89 degrees. Therefore, the container unit 2 is permitted to move from the pulled-out position to the retained position, and interference between the abutment walls 344 of the driven shaft 34 and the pushing walls 324 of the driving shaft 32 during the movement of the container unit 2 can be avoided. At this time, the abutment walls 344 of the driven shaft 34 are disposed in the retaining space 314, and the driven shaft 34 is coaxially aligned with the driving shaft 32.

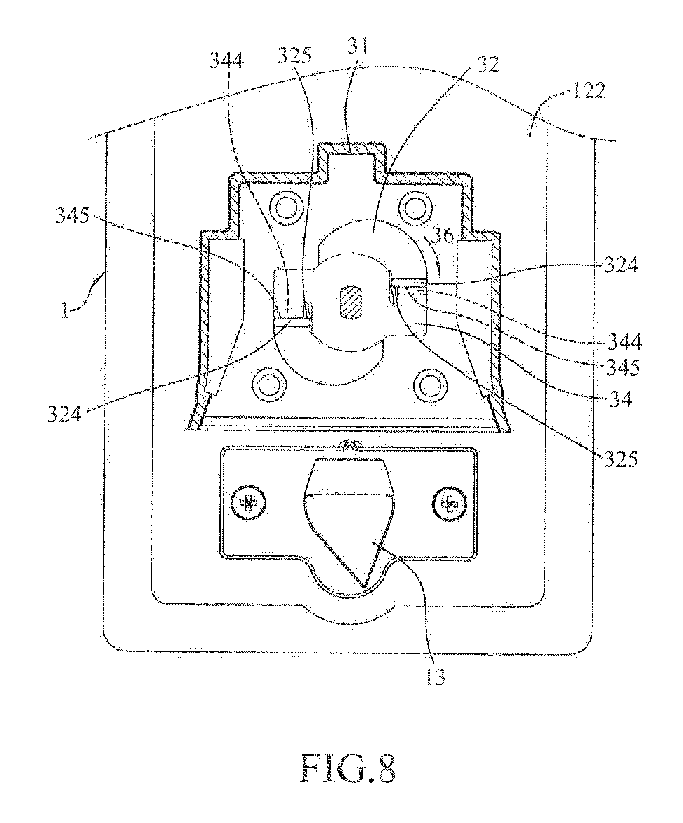

As further shown in Figure 8, when the container unit 2 is at the retained position, the driving shaft 32 is further rotated about the axis 39 (see Figure 3) in a rotational direction 36 by the power supply unit 14 (see Figure 3) to abut the pushing surfaces 325 of the pushing walls 324 respectively against the abutment surfaces 345 of the abutment walls 344 of the driven shaft 34. When the driving shaft 32 is kept rotated in the rotational direction 36, the driven shaft 34 is driven to rotate about the axis 39 together with the rotary paddle 23.

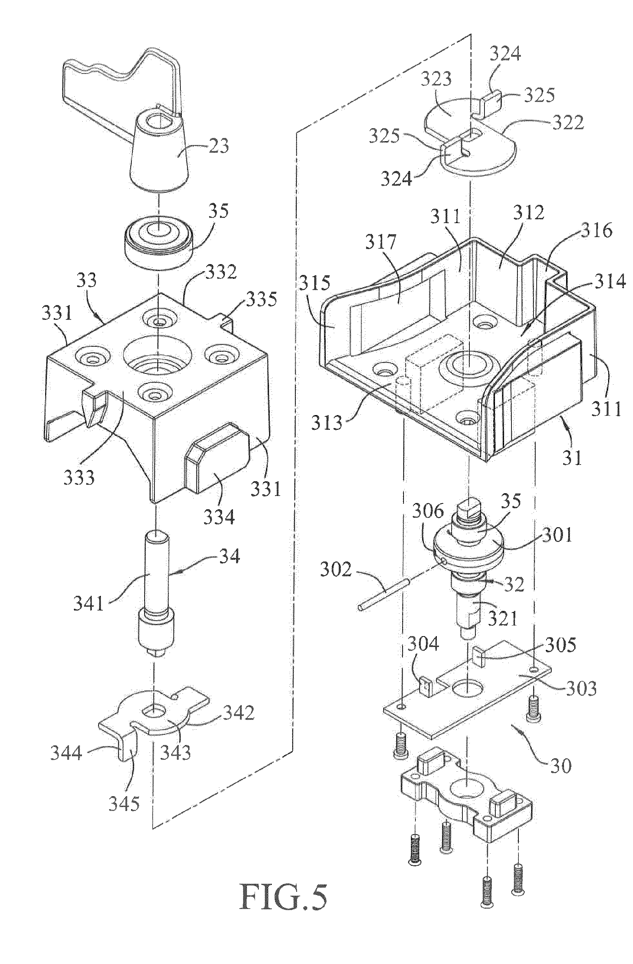

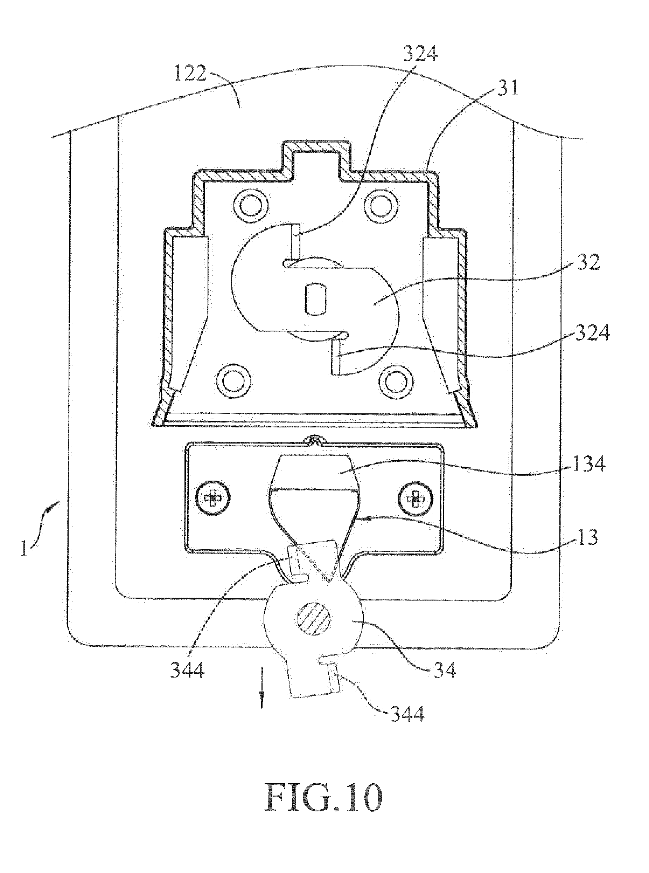

Referring to Figures 3, 9 and 10, to withdraw the container unit 2 from the retained position to the pulled-out position, the power supply unit 14 is first turned off to be arrested from rotating the driving and driven shafts 32, 34 in the rotational direction 36. The driving shaft 32 is then rotated back to the engageable position. Various ways may be adopted to restore the driving shaft 32 to the engageable position. For example, the power supply unit 14 may be reactivated to rotate the driving shaft 32 in another direction opposite to the rotational direction 36. The control unit 30 functions to ensure that the driving shaft 32 is correctly returned to the engageable position. When the driving shaft 32 is at the engageable position, light emitted from the light emitting component 304 (see Figure 5) of the control unit 30 passes through the through hole 306 of the control seat 301 and is received by the light receiving component 305. The control unit 30 can then be operated to stop rotation of the driving shaft 32.

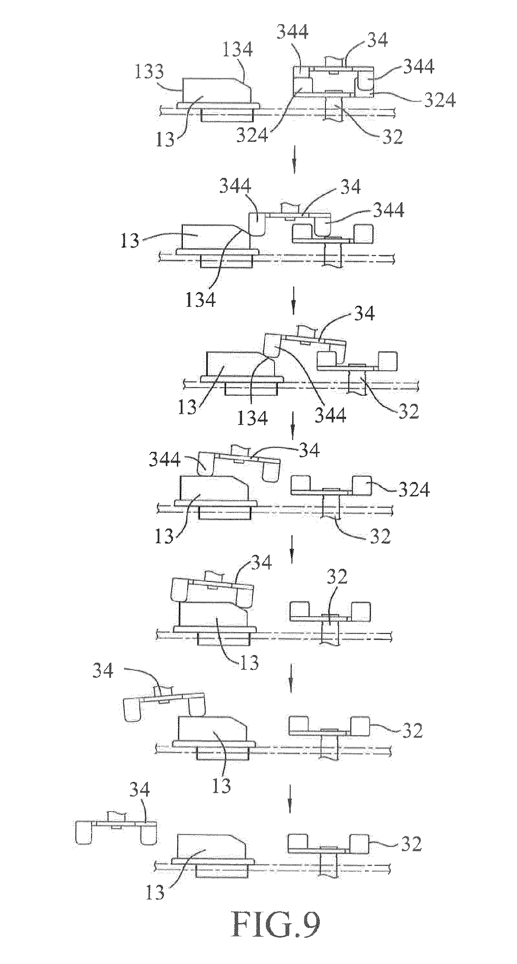

Once the driving shaft 32 is at the engageable position, the container unit 2 is allowed to be moved in the moving axis 20 toward the pulled-out position. As shown in Figure 9, during the movement of the container unit 2 from the retained position to the pulled-out position, one of the abutment walls 344 of the driven shaft 34 abuts non-rotatably against the inclined surface 134 of the guide element 13. The container 22 is urged to slightly sway to enable the one of the abutment walls 344 to slide along the inclined surface 134. Therefore, the driven shaft 34, the second guide seat 33 and the container 22 will not rotate during the withdrawal of the container unit 2 which would otherwise cause rotation of the rotary paddle 23 and ruin the well-baked loaf in the container 22.

It should be noted that, the driving mechanism 3 of this invention may be applied to other household appliances, such as food processors or blenders.

In sum, the container unit 2 can be easily retained in or pulled out from the housing unit 1. Moreover, since the container unit 2 can be pushed in or pulled out from the housing unit 1 in the moving axis 20 instead of through a top end of the housing unit 1, location choices for the bread making machine are less limiting.

## Claims

1. A driving mechanism (3) adapted to be mounted in an electrical appliance, the electrical appliance including a housing unit (1) that includes a power supply unit (14), and a container unit (2) that is connected to said housing unit (1), that includes a rotary paddle (23), and that is movable in a moving axis (20) relative to the housing unit (1) between a retained position to be retained in the housing unit (1), and a pulled-out position to be out of the housing unit (1), said driving mechanism (3) being **characterized by**:
a driven shaft (34) adapted to be mounted to the container unit (2) and having at least one abutment wall (344), therotarypaddle (23) beingcoupledco-rotatably to said driven shaft (34);
a driving shaft (32) adapted to be mounted to the housing unit (1), having at least one pushing wall (324), and adapted to be driven by the power supply unit (14) to rotate about an axis (39) which extends in a direction transverse to the moving axis (20) to an engageable state, where the container unit (2) is permitted to be moved from the pulled-out position to the retained position, and where said driving shaft (32) is further rotatable about the axis (39) to drive rotation of said driven shaft (34) about the axis (39) via abutment between said at least one pushing wall (324) and said at least one abutment wall (344); and
a control unit (30) adapted for controlling operation of the power supply unit (14) to move said driving shaft (32) to the engageable state.

2. The driving mechanism (3) as claimed in Claim 1, **characterized in that**:
said driven shaft (34) includes two of said abutment walls (344); and
said driving shaft (32) includes two of said pushing walls (324) that abut respectively against said abutment walls (344) during the rotation of said driven shaft (34) driven by said driving shaft (32).

3. The driving mechanism (3) as claimed in claim 2, further **characterized in that** said pushing walls (324) of said driving shaft (32) are disposed at opposite sides of an imaginary plane (38) which the axis (39) extends along and which is parallel to the moving axis (20) when said driving shaft (32) is at the engageable state.

4. The driving mechanism (3) as claimed in claim 3, further **characterized in that** said pushing walls (324) of said driving shaft (32) are parallel to the imaginary plane (38) when said driving shaft (32) is at the engageable state.

5. The driving mechanism (3) as claimed in claim 4, further **characterized in that**:
said driving mechanism (3) further comprises a first guide seat (31) adapted to mount said driving shaft (32) to the housing unit (1);
said driving shaft (32) has a main shaft portion (321) extending along the axis (39), and a driving shaft portion (322) connected to said main shaft portion (321) and having said pushing walls (324); and
said control unit (30) includes
a control seat (301) coupled co-rotatably to said main shaft portion (321) of said driving shaft (32), and formed with a through hole (306),
a bottom plate (303) connected fixedly to said first guide seat (31),
a light emitting component (304) mounted on said bottom plate (303), and
a light receiving component (305) mounted on said bottom plate (303) and spaced apart from said light emitting component (304), light emitted from said light emitting component (304) passing through said through hole (306) and being received by said light receiving component (305) when said driving shaft (32) is at the engageable state.

6. The driving mechanism (3) as claimed in any one of claims 1 to 5, **characterized in that**:
said driving shaft (32) has a main shaft portion (321) extending along the axis (39), and a driving shaft portion (322) connected to said main shaft portion (321) and having said pushing walls (324); and
said control unit (30) includes
a control seat (301) coupled co-rotatably to said main shaft portion (321) of said driving shaft (32), and formed with a through hole (306),
a stationary light emitting component (304), and
a stationary light receiving component (305) spaced apart from said light emitting component (304), light emitted from said light emitting component (304) passing through said through hole (306) and being received by said light receiving component (305) when said driving shaft (32) is at the engageable state.

7. The driving mechanism (3) as claimed in claim 1, further **characterized by** a first guide seat (31) that is adapted to mount said driving shaft (32) to the housing unit (1), and a second guide seat (33) that is adapted to mount said driven shaft (34) to the container unit (2).

8. The driving mechanism (3) as claimed in claim 7, **characterized in that**:
said first guide seat (31) has a retaining space (314);
said at least one pushing wall (324) of said driving shaft (32) is disposed in said retaining space (314); and
said at least one abutment wall (344) of said driven shaft (34) is disposed in said retaining space (314) when the container unit (2) is at the retained position.

9. The driving mechanism (3) as claimed in claim 8, further **characterized in that**:
said first guide seat (31) includes two first side plates (311) disposed at opposite sides of an imaginary plane (38) which the axis (39) extends along and which is parallel to the moving axis (20), each of said first side plates (311) being formed with a side groove (317); and
said second guide seat (33) includes two second side plates (331) to be disposed adjacent respectively to said first side plates (311), each of said second side plates (331) being formed with a side protrusion (334) engaging removably said side groove (317) of the respective one of said first side plates (311) when the container unit (2) is at the retained position.

10. The driving mechanism (3) as claimed in claim 9, further **characterized in that**:
said first guide seat (31) further includes a first end plate (312) perpendicular to the imaginary plane (38), interconnecting said first side plates (311), and formed with an end groove (316); and
said second guide seat (33) further includes a second end plate (332) perpendicular to the imaginary plane (38), interconnecting said second side plates (331), and formed with an end protrusion (335) that engages removably said end groove (316) when the container unit (2) is at the retained position.

11. A bread making machine **characterized by**:
a housing unit (1) including a housing (11) that defines a receiving space (12) therein, and a power supply unit (14) that is disposed in said housing (11);
a container unit (2) including a container (22) and a rotary paddle (23) that is disposed in said container (22), said container unit (2) being movable in a moving axis (20) relative to said housing unit (1) between a retained position to be retained in said receiving space (12) of said housing unit (1), and a pulled-out position to be out of said housing unit (1); and
a driving mechanism (3) including
a driven shaft (34) that is mounted to said container unit (2) and that has at least one abutment wall (344), said rotary paddle (23) being coupled co-rotatably to said driven shaft (34),
a driving shaft (32) that is mounted to said housing (11), that has at least one pushing wall (324), and that is able to be driven by said power supply unit (14) to rotate about an axis (39) which extends in a direction transverse to the moving axis (20) to an engageable state, where said container unit (2) is permitted to be moved from the pulled-out position to the retained position, and where said driving shaft (32) is further rotatable about the axis (39) to drive rotation of said driven shaft (34) about the axis (39) via abutment between said at least one pushing wall (324) and said at least one abutment wall (344), and
a control unit (30) that is disposed for controlling operation of said power supply unit (14) to move said driving shaft (32) to the engageable state.

12. The bread making machine as claimed in claim 11, **characterized in that**:
said housing (11) has a side opening (121) communicating with said receiving space (12);
said housing unit (1) further includes a guide element (13) disposed in said housing (11) between said side opening (121) and said driving shaft (32) of said driving mechanism (3) and having at least one guide surface (131, 132), said at least one abutment wall (344) of said driven shaft (34) abutting slidably against said at least one guide surface (131, 132) when said container unit (2) is moved toward the retained position, and being pushed under guidance of said at least one guide surface (131, 132) to drive rotation of the driven shaft (34) to a non-interfering position, thereby avoiding interference between said at least one abutment wall (344) of said driven shaft (34) and said at least one pushing wall (324) of said driving shaft (32) during the movement of said container unit (2) to the retained position.

13. The bread making machine as claimed in claim 12, further **characterized in that**:
said driven shaft (34) includes two of said abutment walls (344);
said driving shaft (32) includes two of said pushing walls (324) that abut respectively against said abutment walls (344) during the rotation of said driven shaft (34) driven by said driving shaft (32); and
said guide element (13) further has an inclined surface (134) disposed proximate to said driving shaft (32), said abutment walls (344) of said driven shaft (34) abutting non-rotatably against and sliding along said inclined surface (134) when said container unit (2) is moved from the retained position to the pulled-out position.

14. The bread making machine as claimed in claim 12, further **characterized in that**:
said driven shaft (34) includes two of said abutment walls (344);
said driving shaft (32) includes two of said pushing walls (324) that abut respectively against said abutment walls (344) during the rotation of said driven shaft (34) driven by said driving shaft (32);
said pushing walls (324) of said driving shaft (32) are disposed at opposite sides of an imaginary plane (38) which the axis (39) extends along and which is parallel to the moving axis (20) when said driving shaft (32) is at the engageable state; and
said guide element (13) has two of said guide surfaces (131, 132) connected to each other at a tip (133) of said guide element (13) that is adjacent to said side opening (121) of said housing (11) and that is disposed at one side of the imaginary plane (38).

15. The bread making machine as claimed in claim 14, further **characterized in that** said guide element (13) further has an inclined surface (134) disposed proximate to said driving shaft (32), said abutment walls (344) of said driven shaft (34) abutting non-rotatably and sliding along said inclined surface (134) when said container unit (2) is moved from the retained position to the pulled-out position.

16. The bread making machine as claimed in claim 15, further **characterized in that**:
said driving mechanism (3) further includes a first guide seat (31) mounting said driving shaft (32) to said housing unit (1);
said driving shaft (32) has a main shaft portion (321) extending along the axis (39), and a driving shaft portion (322) connected to said main shaft portion (321) and having said pushing walls (324); and
said control unit (30) includes
a control seat (301) coupled co-rotatably to said main shaft portion (321) of said driving shaft (32), and formed with a through hole (306),
a bottom plate (303) connected fixedly to said first guide seat (31),
a light emitting component (304) mounted on said bottom plate (303), and
a light receiving component (305) mounted on said bottom plate (303) and spaced apart from said light emitting component (304), light emitted from said light emitting component (304) passing through said through hole (306) and being received by said light receiving component (305) when said driving shaft (32) is at the engageable state.

17. The driving mechanism (3) as claimed in any one of claims 11 to 16, **characterized in that**:
said driving shaft (32) has a main shaft portion (321) extending along the axis (39), and a driving shaft portion (322) connected to said main shaft portion (321) and having said pushing walls (324); and
said control unit (30) includes
a control seat (301) coupled co-rotatably to said main shaft portion (321) of said driving shaft (32), and formed with a through hole (306),
a stationary light emitting component (304), and
a stationary light receiving component (305) spaced apart from said light emitting component (304), light emitted from said light emitting component (304) passing through said through hole (306) and being received by said light receiving component (305) when said driving shaft (32) is at the engageable state.

18. The bread making machine as claimed in any one of claims 12 to 17, further **characterized in that** said container unit (2) further includes a support seat (21) that includes
a base board (211) mounted with said container (22) and said rotary paddle (23) thereon, connected to said housing (11), and movable in the moving axis (20) relative to said housing (11), and
a side board (212) connected to said base board (211) for covering said side opening (121) when said container unit (2) is at the retained position.
